# FASCICULE DE BREVET EUROPEEN

(11) **EP 3 223 600 B1**
(45) Date de publication et mention de la délivrance du brevet: **15.04.2020**
(21) Numéro de dépôt: 15805571.5
(22) Date de dépôt: 03.11.2015
(51) Int. Cl.: A01G 3/037, B23D 29/02

(54) **OUTIL DE COUPE MOTORISÉ À GARDE**
MOTORISIERTES SCHNEIDWERKZEUG MIT SCHUTZVORRICHTUNG
MOTORISED CUTTING TOOL WITH GUARD

(30) Priorité: 25.11.2014 FR 1461402
(43) Date de publication de la demande: 04.10.2017
(73) Titulaire: PELLENC, 84120 Pertuis (FR)
(72) Inventeur: PELLENC, Roger, F-84120 Pertuis (FR)
(74) Mandataire: Weber, Etienne Nicolas
(86) Numéro de dépôt international: PCT/FR2015/052962
(87) Numéro de publication internationale: WO 2016/083693

(56) Documents cités:
- CN-A- 102 907 268
- CN-U- 203 537 937
- DE-A1- 19 849 976

## Description

### Domaine technique

La présente invention concerne un outil de coupe motorisé portable et en particulier un outil de coupe tel qu'un sécateur ou une cisaille à tôles. L'invention peut toutefois trouver des applications pour d'autres outils de coupe et en particulier d'outils de coupe pourvus d'une garde de protection de la main.

### Etat de la technique antérieure.

CN 102 907 268 A divulgue un outil de coupe motorisé portable comprenant un moteur logé dans un corps d'outil, un organe de coupe, une transmission reliant le moteur à l'organe de coupe, et au moins une garde de protection de la main de l'utilisateur ménageant un passage pour la main autour d'un organe de commande de l'outil, lequel outil comporte un capot, le capot pouvant occuper une position, dite «fermée », contre le corps d'outil, et une position, dite « ouverte », retirée du corps d'outil et donnant accès à une partie de l'outil protégée par le capot dans la position fermée, le capot étant relié au corps d'outil par l'intermédiaire de la garde dans la position ouverte et dans la position fermée du capot le capot étant relié au corps d'outil par l'intermédiaire de la garde dans la position ouverte et dans la position fermée du capot.

La protection de l'utilisateur et en particulier de la main de l'utilisateur saisissant un outil de coupe peut être assurée par différents moyens, et en particulier par une garde.

La main de l'utilisateur saisit l'outil par une poignée ou par le corps de l'outil formant poignée. A proximité de la poignée, ou de la partie de l'outil prévue pour le saisir, on trouve généralement un organe de commande de l'outil actionnable également par la main ou par un doigt, tout en tenant l'outil. Pour certains outils il peut s'agir simplement d'un interrupteur pour la mise en marche ou l'arrêt du moteur de l'outil. Pour d'autres outils, plus sophistiqués, il peut s'agir d'une gâchette ou d'une interface plus complexe commandant une ou plusieurs fonctions de l'outil. Par exemple, pour un sécateur une gâchette est généralement prévue pour commander le déplacement d'une lame de coupe. Pour d'autres outils de coupe, la gâchette peut commander une vitesse de mouvement de l'organe de coupe, par exemple la vitesse de déplacement linéaire, ou de rotation, d'une lame de scie.

Comme indiqué ci-dessus, un moyen simple pour protéger la main de l'utilisateur consiste à entourer une partie de la poignée, et/ou l'organe de commande d'une garde. La garde protège la main ou le doigt de l'utilisateur d'éventuels chocs contre des obstacles rencontrés avec l'outil. Elle peut éviter aussi à la main de glisser sur la poignée et atteindre l'organe de coupe. Une autre fonction importante de la garde est d'empêcher que des obstacles dans le champ de travail ne viennent heurter l'organe de commande et ne déclenchent de manière intempestive et accidentelle le fonctionnement de l'outil.

L'organe de coupe, de même que la transmission reliant le moteur à l'organe de coupe, peuvent constituer également des dangers d'accident pour la main de l'utilisateur. Aussi, nombre d'outils de coupe sont pourvus d'un carter de protection qui entoure, autant que possible, les organes de transmission du mouvement et parfois une partie de l'organe de coupe.

En raison du caractère mobile de certaines parties de l'organe de coupe, le carter ne peut généralement pas être ajusté de manière parfaitement étanche autour de l'organe de coupe. Or, les outils de coupe génèrent généralement des copeaux, des poussières ou des reliefs de matériau, qui viennent ainsi se glisser entre le carter et l'organe de coupe, et qui peuvent, souvent par accumulation, venir entraver l'organe de coupe et/ou la transmission reliant le moteur à l'organe de coupe.

Dans ce cas, des opérations de nettoyage sont nécessaires et le carter doit être déposé pour donner accès aux pièces à nettoyer.

De la même façon le carter peut constituer un obstacle pour le remplacement des pièces d'usure de l'organe de coupe, par exemple des lames.

Une difficulté similaire peut exister pour atteindre d'autres parties internes de l'outil, qui ne sont pas directement liés à la fonction de coupe. Il s'agit par exemple de capteurs, de composants électroniques ou des connecteurs, sensibles aux salissures et nécessitant un entretien périodique ou occasionnel.

Ainsi, et pour un nombre d'appareils de coupe, il apparaît nécessaire de déposer le carter ou une partie du carter, par exemple une trappe, en vue de procéder au nettoyage, à l'entretien, au graissage, ou au remplacement des organes de coupe.

L'ouverture d'une trappe ou la dépose du carter requièrent généralement des outils spécifiques et sont difficilement réalisables sur le terrain en raison, notamment, d'un risque élevé de perte de pièces.

### Exposé de l'invention

La présente invention vise à obvier ces difficultés mentionnées ci-dessus. Elle vise également à garantir à la fois une bonne sécurité d'utilisation de l'outil et un accès facile et rapide aux organes sujets à des opérations de maintenance.

L'invention vise aussi à proposer un outil pour lequel un certain nombre d'opération de maintenance peuvent être réalisés sur le lieu d'utilisation, sans retour en atelier.

Pour atteindre ces buts, l'invention propose un outil de coupe motorisé portable comprenant un moteur, logé dans un corps d'outil, un organe de coupe, une transmission reliant le moteur à l'organe de coupe, et au moins une garde de protection de la main de l'utilisateur ménageant un passage pour la main autour d'au moins l'un parmi un organe de commande de l'outil, et une poignée de saisie de l'outil. Conformément à l'invention l'outil comporte un capot, le capot pouvant occuper une position, dite «fermée », contre le corps d'outil, et une position, dite « ouverte», distante du corps d'outil et donnant accès à une partie de l'outil protégée par le capot dans la positon fermée, le capot étant relié au corps d'outil par l'intermédiaire de la garde dans la position ouverte et dans la position fermée du capot..

Le moteur de l'outil peut être un moteur thermique ou un moteur électrique susceptible d'entrainer l'organe de coupe par l'intermédiaire de la transmission. Le fonctionnement du moteur peut être commandé par l'organe de commande, et éventuellement par l'intermédiaire d'une carte électronique de commande et de pilotage. La transmission peut comporter, selon le type d'outil, un réducteur et/ou ou un mécanisme de conversion d'un mouvement de rotation en un mouvement de translation.

Dans une réalisation particulière de l'invention, la partie protégée de l'outil, c'est-à-dire la partie de l'outil se trouvant sous le capot amovible, dans sa position fermée, peut comporter au moins l'un parmi, la transmission, une partie de l'organe de coupe, une fixation de l'organe de coupe, un connecteur électrique, et un graisseur.

Ainsi, dans la position ouverte du capot il est possible de procéder a des opérations de maintenance, telles que le nettoyage de ces organes, et en particulier de la transmission, le remplacement de l'organe de coupe, le graissage, et éventuellement des opérations de maintenance requérant un accès à la carte électronique, par l'intermédiaire du connecteur.

Selon l'invention, la garde est reliée de manière rigide au capot et montée pivotante sur le corps d'outil, pour pivoter avec le capot entre la position fermée et la position ouverte. Par ailleurs l'outil peut comporter un verrou pour maintenir le capot dans la position fermée. Le verrou peut coopérer avec la garde ou avec le capot.

Ces dispositions permettent de déposer le capot amovible rapidement et sans outils. La fixation du capot sur la garde et le verrouillage permettent d'éviter tout système de fixation par vissage et éliminent le risque de la perte de vis ou d'autres accessoires de fixation. De plus, en étant relié à la garde, solidaire du corps de l'outil, le risque de perdre le capot est également éliminé. Grâce à ces caractéristiques, il est possible d'envisager, sur le terrain d'utilisation, des opérations de maintenance sommaire. Il est possible, par exemple, d'effectuer un changement de lame ou d'organe de coupe, d'effectuer un nettoyage, ou encore de retirer un corps étranger. En d'autres termes, il est possible de parer à un certain nombre de difficultés rencontrées lors de l'utilisation de l'outil sans retour de l'outil en atelier.

Le pivotement de la garde, notamment autour de son point d'attache au corps de l'outil, permet de retirer complètement le capot de la partie de l'outil qu'il protège et, comme indiqué ci-dessus, évite de perdre le capot. L'articulation de la garde peut se faire autour d'un pivot ou tout type de charnière approprié. La fixation articulée de la garde sur le corps de l'outil peut se faire sur un ancrage dédié ou peut se faire sur une partie fixe du carter. On entend par partie fixe du carter une partie qui ne peut pas être retirée avec le capot. Il s'agit par exemple d'une partie vissée du carter.

Dans une réalisation particulière du verrou celui-ci peut comporter au moins un loquet et au moins un arrêtoir solidaires respectivement du corps d'outil, dans la partie protégée, et d'une partie interne du capot. Le loquet peut venir en prise dans l'arrêtoir, et peut être libéré de l'arrêtoir par flexion de la garde. Grâce à cette disposition particulière, les organes du verrou sont également protégés par le capot. La garde présente de préférence une flexibilité adaptée, de manière qu'il soit possible d'exercer, à la main, la force nécessaire pour obtenir la flexion d'enclenchement ou de déclenchement du verrou. La garde peut aussi être globalement rigide et ne présenter qu'une section avec une capacité de flexion adaptée à l'actionnement du verrou.

Selon un autre aspect avantageux, au moins l'un du loquet et de l'arrêtoir peuvent présenter une rampe de fermeture et un seuil d'ouverture. La rampe de fermeture et le seuil d'ouverture autorisent une fermeture aisée du capot tout en évitant une ouverture intempestive. La rampe peut notamment être mise à profit pour transformer une pression exercée sur la garde de l'extérieur en un effort de flexion.

Une partie du corps de l'outil peut être configurée en poignée. L'outil peut aussi présenter un carter formant poignée. Il s'agit, par exemple d'un carter fixe, assemblé par vissage.

Dans une conformation particulière de l'outil, le corps d'outil peut présenter une première extrémité portant l'organe de coupe, et une deuxième extrémité opposée à la première extrémité, présentant une articulation de la garde. Le fait de fixer la garde à une extrémité distale de celle recevant l'organe de coupe permet d'allonger au maximum la garde. Ceci peut être intéressant notamment pour des outils de petite taille. En effet, en raison de la longueur de la garde, une flexion d'actionnement du verrou suffisante peut être obtenue y compris lorsque la garde est en un matériau intrinsèquement rigide.

L'outil de coupe peut être pourvu d'un dispositif de sécurité actionnable par l'un du capot et de la garde et interdisant une activation de l'organe de coupe lorsque le capot est dans la position ouverte.

Il s'agit, par exemple d'un interrupteur ou un capteur optique coopérant avec le capot ou la garde, et relié à la carte électronique, pour interdire l'alimentation en énergie du moteur lorsque le capot est ouvert.

L'invention concerne enfin un outil de coupe à usage de sécateur, tel que décrit précédemment, et en particulier un sécateur comportant une lame fixe et une lame mobile reliée à la transmission, par un pivot logé sous le capot dans la position fermée.

D'autres caractéristiques et avantages de l'invention ressortent de la description des figures qui suit. Cette description est donnée à titre d'illustration et non de limitation.

### Brève description des figures

La figure 1 est une vue de côté d'un sécateur conforme à l'invention illustrant une position fermée d'un ensemble capot-garde.
La figure 2 est une vue de côté du sécateur de la figure 1, avec l'ensemble capot-garde dans une position ouverte.
La figure 3 est une vue en en perspective de l'avant du sécateur des figures 1 et 2, dont certaines parties sont retirées.

Description détaillée de modes de mise en oeuvre de l'invention.

La description qui suit se réfère à une mise en œuvre particulière de l'invention pour la réalisation d'un sécateur. Cependant et de manière tout à fait similaire, l'invention peut être appliquée à d'autres outils de coupe, tels que des taille-haies, des cisailles à tôle, ou des scies qui en différent essentiellement par la forme de l'organe de coupe.

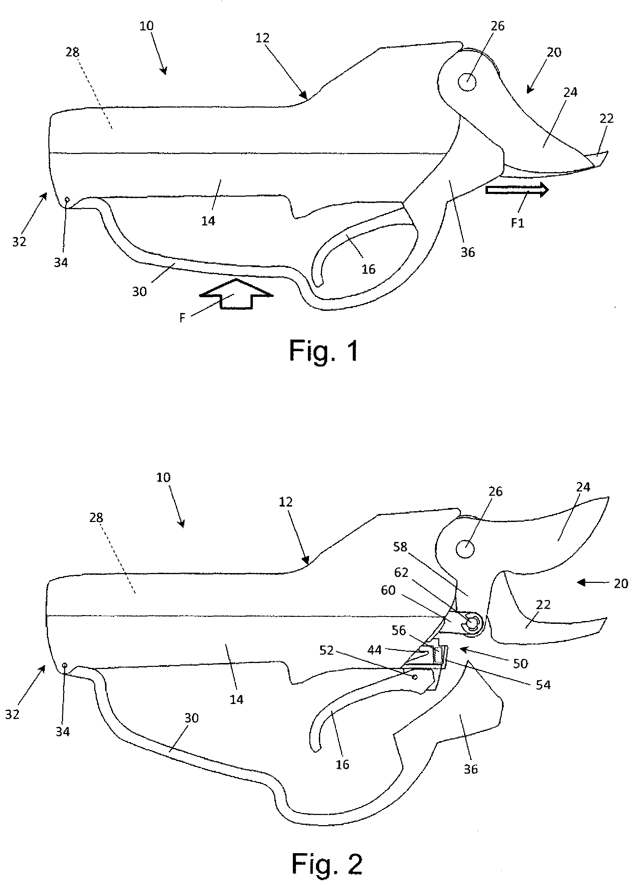

Le sécateur de la figure 1 présente un corps d'outil 10, comprenant une pluralité de parties fixées rigidement entre elles, essentiellement par vissage. Parmi ces parties, la figure montre un carter 12.

Le corps d'outil, et plus précisément le carter 12 présentent une partie sensiblement cylindrique formant une poignée 14. Le diamètre de la partie formant poignée 14 est adapté de manière qu'un utilisateur puisse facilement saisir l'outil avec la main.

Le sécateur de la figure 1 peut aussi être pourvu d'une unité d'alimentation distante et d'un cordon d'alimentation qui le relie à l'unité d'alimentation distante. Ces parties ne sont pas représentées pour simplifier les figures.

A l'avant de la partie formant poignée se trouve une gâchette 16. La gâchette peut être utilisée comme organe de commande, notamment pour commander l'ouverture et la fermeture d'un organe de coupe 20. La position de la gâchette est ajustée à la poignée 14 de telle manière que la gâchette puisse aisément être actionnée par un doigt de la main de l'utilisateur qui saisit la poignée.

L'organe de coupe 20, monté en une extrémité du corps d'outil 10, est pourvu d'une lame fixe 22, et une lame mobile 24 articulée autour d'un pivot 26. L'organe de coupe est représenté dans une configuration de lames fermées, c'est-à-dire avec la lame mobile refermée sur la lame fixe. Un moteur 28, logé dans le corps d'outil 10, est relié à la lame mobile 24 par une transmission adaptée à faire pivoter la lame mobile autour du pivot 26. Il s'agit dans l'exemple décrit d'un moteur électrique sans balais. La transmission peut comporter notamment un mécanisme de vis-écrou à billes transformant un mouvement de rotation du moteur en un mouvement de translation. Des biellettes transmettent le mouvement de translation à une came de la lame mobile. La transmission peut aussi comporter un réducteur en sortie du moteur.

Conformément à l'invention, le sécateur est équipé d'une garde 30, qui s'étend le long de la poignée 14 et qui entoure en partie la gâchette 16. La garde peut être réalisée de manière très simple sous la forme d'une barre métallique ou en matière plastique.

La barre est reliée à une partie arrière 32 du corps d'outil 10 sur laquelle elle est articulée. La garde est articulée en particulier autour d'une broche 34 formant pivot.

L'avant de la garde 30 est reliée à un capot 36 qui est représenté dans sa position fermée. Dans cette position, le capot vient en appui contre la partie avant du corps d'outil 10 où se trouve l'organe de coupe 20. Dans la position fermée, le capot constitue une prolongation de la partie fixe du carter 12.

Le capot 36 est formé de préférence d'une seule pièce avec la garde, par exemple par moulage. Le capot, de même que la garde peuvent être des pièces métalliques ou, de préférence, en matière plastique.

On peut observer que le capot 36 vient recouvrir et protéger une partie de l'organe de coupe 20.

La figure 2 montre le sécateur dans lequel le capot 36 est dans sa position ouverte. L'organe de coupe est aussi montré ouvert, c'est-à-dire avec la lame mobile 24 relevée par rapport à la lame fixe 22.

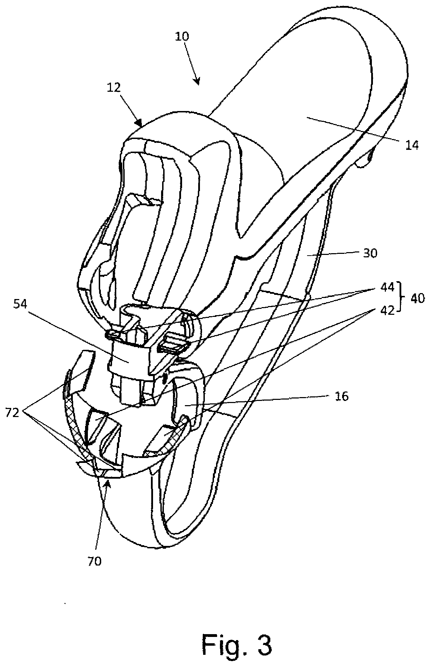

L'ouverture du capot est opérée de manière très simple en exerçant sur la garde, de préférence dans sa partie médiane, une force représentée par une flèche F visible sur la figure 1, en direction de la poignée 14. Cette force a pour effet d'imprimer à la garde une légère flexion, suffisante toutefois pour libérer un verrou 40 retenant le capot fermé. Le verrou est visible sur la figure 3. Plus précisément, la flexion permet de libérer des loquets 42 du verrou, reliés au capot 36, d'arrêtoirs 44 du verrou, solidaires du corps d'outil 10. On observe en effet sur la figure 3 que le verrou comporte des loquets et des arrêtoirs complémentaires, respectivement de chaque côté du corps d'outil et du capot. Ainsi, lors de l'application de la force F, le capot 36 est soumis à un mouvement dans une direction F1 représentée sur la figure 1, forçant les loquets 42 à se déplacer sensiblement dans la direction F1 jusqu'à se désolidariser des arrêtoirs 44.

Le capot peut être refermé, et verrouillé dans sa position fermée, en appuyant également sur la garde 30 de la même manière. Dans ce cas, une rampe des arrêtoirs permet également une légère flexion de la garde pour faciliter le verrouillage. La flexion nécessaire de la garde pour l'enclenchement du verrou, et les rampes des arrêtoirs, créent un seuil d'ouverture du capot qui empêche une ouverture intempestive.

La position ouverte du capot sur la figure 2, c'est-à-dire en retrait du corps d'outil 10, permet de mieux voir une partie 50 de l'outil normalement protégée par le capot 36 dans sa position fermée.

La partie protégée 50 comprend, dans l'exemple illustré une articulation 52 de la gâchette et un connecteur électrique 56. Le connecteur électrique 56 est relié à une carte électronique de commande et de pilotage du moteur, non représentée. La carte électronique a pour fonction principale de piloter l'alimentation en énergie du moteur en fonction de signaux de commande délivrés par un capteur de position de la gâchette 16. La carte peut aussi exercer d'autres fonctions, telles que des fonctions de sécurité. Par exemple, un capteur d'ouverture 54 du capot peut être relié à la carte électronique pour empêcher une mise en mouvement de l'organe de coupe lorsque le capot est ouvert. Le capteur d'ouverture est, par exemple, un petit interrupteur ou un capteur optique.

Le connecteur 56, mentionné ci-dessus, permet de relier la carte électronique à un équipement électronique extérieur. Un tel équipement peut être destiné, par exemple, à lire ou à configurer des paramètres de fonctionnement ou de gestion de l'outil.

La partie protégée 50 de l'outil comprend également une partie de la transmission 60 reliant le moteur à l'organe de coupe 20. On peut observer que la transmission 60 comprend des biellettes reliées par un pivot 62 à une came 58 de la lame mobile 24.

Toutes ces pièces deviennent accessibles lorsque le capot est ouvert. Il est possible ainsi de les nettoyer, par exemple par soufflage, de les graisser, et/ou de les remplacer. En particulier, la lame mobile 24 peut être remplacée lorsqu'elle est émoussée ou endommagée.

Lorsque le capot est fermé, les organes situés dans la partie protégée de l'outil, tout en n'étant pas entièrement à l'abri de salissures, demeurent toutefois largement protégés. De la même façon le capot refermé empêche également un accès accidentel des doigts de l'utilisateur aux organes internes en mouvement.

On peut noter que les organes du verrou 40 décrit précédemment sont également protégés par le capot.

La figure 3 montre une vue en en perspective de l'avant du sécateur des figures 1 et 2. Sur la figure 3, le dispositif de coupe et sa transmission sont retirés, et le capot, dans sa position ouverte, est représenté en coupe partielle. Ainsi, la figure 3 permet de mieux voir les loquets 42 formés d'une seule pièce avec le capot sur une face interne du capot, et les arrêtoirs 44 formés sur le corps d'outil 10. De préférence un loquet et un arrêtoir sont prévus sur chaque côté du capot et du corps d'outil, par rapport à un plan de symétrie de l'outil passant par la lame fixe 22.

On peut observer que le capot 36 présente dans sa partie avant un passage 70 de lame 22, avec des flancs 72 ajustés sur la lame fixe 22 et une partie de la lame mobile lorsqu'elle refermée sur la lame fixe.

Dans la position fermée du capot les flancs 72 viennent au plus près de la lame fixe non représentée.

## Revendications

1. Outil de coupe motorisé portable comprenant un moteur (28) logé dans un corps d'outil (10), un organe de coupe (20), une transmission (60) reliant le moteur à l'organe de coupe, et au moins une garde (30) de protection de la main de l'utilisateur ménageant un passage pour la main autour d'au moins l'un parmi un organe (16) de commande de l'outil, et une poignée (14) de saisie de l'outil, **caractérisé en ce que** l'outil comporte un capot (36), le capot pouvant occuper une position, dite «fermée », contre le corps d'outil (10), et une position, dite « ouverte», distante du corps d'outil et donnant accès à une partie (50) de l'outil protégée par le capot dans la position fermée, dans lequel
- le capot est relié au corps d'outil (10) par l'intermédiaire de la garde (30) dans la position ouverte et dans la position fermée du capot, **caractérisé en ce que**
- la garde (30) est reliée de manière rigide au capot (36) et est montée pivotante sur le corps d'outil (10), pour pivoter avec le capot (36) entre la position fermée et la position ouverte.

2. Outil de coupe selon la revendication 1, dans lequel la partie protégée (50) comprend au moins l'un parmi, la transmission (60), une partie de l'organe de coupe (20, 22, 24), une fixation (62) de l'organe de coupe, un connecteur électrique (56), et un graisseur.

3. Outil de coupe selon l'une des revendications précédentes comportant un verrou (40) pour maintenir le capot dans la position fermée.

4. Outil de coupe selon la revendication 3, dans lequel le verrou comporte au moins un loquet (42) et au moins un arrêtoir (44) solidaires respectivement de la partie protégée de l'outil par le capot dans la position fermée, et une partie interne du capot, le loquet (42) pouvant venir en prise sur l'arrêtoir (44), et pouvant être libéré de l'arrêtoir par flexion de la garde (30).

5. Outil de coupe selon la revendication 4, dans lequel au moins l'un du loquet et de l'arrêtoir présentent une rampe de fermeture, et un seuil d'ouverture.

6. Outil de coupe selon l'une des revendications précédentes dans lequel le corps d'outil (10) présente un carter (12) formant une poignée (14).

7. Outil de coupe selon l'une des revendication précédentes dans lequel le corps d'outil présente une première extrémité portant l'organe de coupe (22), et une deuxième extrémité opposée à la première extrémité, présentant une articulation (34) de la garde.

8. Outil de coupe selon l'une des revendications précédentes, comprenant un dispositif de sécurité (54) actionnable par l'un du capot et de la garde et interdisant une activation de l'organe de coupe lorsque le capot est dans la position ouverte.

9. Outil de coupe, selon l'une des revendications précédentes dans lequel l'organe de coupe comporte une lame fixe (22) et une lame mobile (24) reliée à la transmission par un pivot (62) logé sous le capot dans la position fermée.

## Patentansprüche

1. Tragbares motorisiertes Schneidwerkzeug, umfassend einen Motor (28), der in einem Werkzeugkörper (10) untergebracht ist, ein Schneidelement (20), ein Getriebe (60), das den Motor mit dem Schneidelement verbindet, und mindestens einen Schutz (30) zum Schutz der Hand des Benutzers, der einen Durchgang für die Hand bereitstellt, zum Steuern des Werkzeugs durch mindestens eines Elements (16), und einen Griff (14) zum Greifen das Werkzeug, **dadurch gekennzeichnet, dass** das Werkzeug eine Abdeckung (36) umfasst, wobei die Abdeckung eine Position, die als "geschlossen" bezeichnet wird, gegen den Werkzeugkörper (10) einnehmen kann, und eine Position, die als "offen" bezeichnet wird, bei dem der Werkzeugkörper entfernt ist und Zugang zu einem Teil (50) des Werkzeugs ermöglicht, der durch die Abdeckung in der geschlossenen Position geschützt ist, wobei die Abdeckung über den Schutz (30) mit dem Werkzeugkörper (10) in der offenen Position und in der geschlossenen Position der Abdeckung verbunden ist, **dadurch gekennzeichnet, dass** der Schutz (30) starr mit der Abdeckung (30) verbunden und schwenkbar am Werkzeugkörper (10) angebracht ist, um mit der Abdeckung (36) zwischen der geschlossenen Position und der offenen Position zu schwenken.

2. Schneidwerkzeug nach Anspruch 1, wobei der geschützte Teil (50) mindestens eines der Teile (60), einen Teil des Schneidelements (20, 22, 24), eine Befestigung (62) des Schneidelements, einen elektrischen Verbinder (56) umfasst.

3. Schneidwerkzeug nach einem der vorhergehenden Ansprüche, umfassend eine Verriegelung (40) zum Halten der Abdeckung in der geschlossenen Position.

4. Schneidwerkzeug nach Anspruch 3, wobei der Riegel mindestens einen Riegel (42) und mindestens einen Halter (44) umfasst, der jeweils durch die Abdeckung in der geschlossenen Position an dem geschützten Teil des Werkzeugs befestigt ist, und einen Innenteil der Abdeckung, wobei der Riegel (42) in den Halter (44) eingreifen und durch Biegen des Schutzes (30) aus dem Halter gelöst werden kann.

5. Schneidwerkzeug nach Anspruch 4, wobei mindestens einer der Riegel und der Stopper eine Schließrampe und eine Öffnungsschwelle aufweisen.

6. Schneidwerkzeug nach einem der vorhergehenden Ansprüche, wobei der Werkzeugkörper (10) ein Gehäuse (12) aufweist, das einen Griff (14) bildet.

7. Schneidwerkzeug nach einem der vorhergehenden Ansprüche, wobei der Werkzeugkörper ein erstes Ende aufweist, das das Schneidelement (22) trägt, und ein zweites Ende gegenüber dem ersten Ende mit einem Scharnier (34) des Schutzes.

8. Schneidwerkzeug nach einem der vorhergehenden Ansprüche, umfassend eine Sicherheitsvorrichtung (54), die durch eine der Abdeckungen und den Schutz betätigt werden kann und eine Aktivierung von dem Schneidelement verhindert, wenn die Abdeckung in der offenen Position ist.

9. Schneidwerkzeug nach einem der vorhergehenden Ansprüche, wobei das Schneidelement eine feste Klinge (22) und eine bewegliche Klinge (24) umfasst, die mit dem Getriebe durch einen Drehpunkt (62) verbunden sind, der in der Position unter der Haube untergebracht ist geschlossen.

## Claims

1. A portable power cutting tool comprising a motor (28) housed in a tool body (10), a cutting member (20), a transmission (60) connecting the motor to the cutting member, and at least one guard (30) for protecting the hand of the user and providing a passage for the hand around at least one of a tool control member (16) and a handle (14) for holding the tool, **characterised in that** the tool comprises a cover (36), which cover can occupy a position referred to as "closed" against the tool body (10) and a position referred to as "open" and spaced from the tool body and giving access to a part (50) of the tool that is protected by the cover in the closed position, wherein
- the cover is connected to the tool body (10) by way of the guard (30) in the open position and in the closed position of the cover, **characterised in that**
- the guard (30) is rigidly connected to the cover (36) and is mounted pivotably on the tool body (10) to pivot with the cover (36) between the closed position and the open position.

2. A cutting tool according to claim 1 wherein the protected part (50) comprises at least one of the transmission (60), a part of the cutting member (20, 22, 24), a fixing (62) for the cutting member, an electrical connector (56) and a greasing member.

3. A cutting tool according to one of the preceding claims comprising a lock (40) for holding the cover in the closed position.

4. A cutting tool according to claim 3 wherein the lock comprises at least one latch (42) and at least one retaining member (44) which are respectively fixed with respect to the part of the tool protected by the cover in the closed position and an internal part of the cover, which latch (42) can come into engagement on the retaining member (44) and can be freed therefrom by flexing of the guard (30).

5. A cutting tool according to claim 4 wherein at least one of the latch and the retaining member have a closure ramp and an opening threshold.

6. A cutting tool according to one of the preceding claims wherein the tool body (10) has a casing (12) forming a handle (14).

7. A cutting tool according to one of the preceding claims wherein the cutting tool has a first end carrying the cutting member (22) and a second end opposite to the first end and having a pivot mounting (34) for the guard.

8. A cutting tool according to one of the preceding claims comprising a safety device (54) actuable by one of the cover and the guard and preventing activation of the cutting member when the cover is in the open position.

9. A cutting member according to one of the preceding claims wherein the cutting member comprises a fixed blade (22) and a moveable blade (24) connected to the transmission by a pivot (62) accommodated under the cover in the closed position.
